# EUROPEAN PATENT SPECIFICATION

(11) **EP 2 365 319 B1**
(45) Date of publication and mention of the grant of the patent: **23.01.2019**
(21) Application number: 11153665.2
(22) Date of filing: 08.02.2011
(51) Int. Cl.: G01N 23/04, G01N 23/207, G01V 5/00, G01N 23/046

(54) **X-ray diffraction and computed tomography**
Röntgenstrahldiffraktion und computergesteuerte Tomografie
Diffraction de rayons X et tomographie assistée par ordinateur

(30) Priority: 14.12.2010 US 968156; 16.02.2010 EP 10153742
(43) Date of publication of application: 14.09.2011
(73) Proprietor: Malvern Panalytical B.V., 7602 EA Almelo (NL)
(72) Inventor: Blaj, Gabriel, 5581 CG Waalre (NL)
(74) Representative: Elkington & Fife LLP

(56) References cited:
- JP-A- 2009 097 937
- BARROSO R C ET AL: "X-ray diffraction microtomography using synchrotron radiation", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 471, no. 1-2, 21 September 2001 (2001-09-21), pages 75-79, XP004306688, ISSN: 0168-9002, DOI: 10.1016/S0168-9002(01)00918-4
- GRIFFITHS J A ET AL: "X-ray diffraction CT of excised breast tissue sections: first results from elettra", 2003 IEEE NUCLEAR SCIENCE SYMPOSIUM CONFERENCE RECORD. / 2003 IEEE NUCLEAR SCIENCE SYMPOSIUM AND MEDICAL IMAGING CONFERENCE. PORTLAND, OR, OCT. 19 - 25, 2003; [IEEE NUCLEAR SCIENCE SYMPOSIUM CONFERENCE RECORD], NEW YORK, NY : IEEE, US, vol. 4, 19 October 2003 (2003-10-19), pages 2330-2334, XP010737518, ISBN: 978-0-7803-8257-2

## Description

The invention relates to an apparatus and a method combining the functions of X-ray diffraction (XRD) and computed tomography (CT).

Computed tomography (CT) is a technique which combines X-ray images using calculations. Conventional absorption X-ray images of a sample are recorded with the sample in a number of different orientations and the images combined using a computing technique to generate a three-dimensional image of the sample. Such techniques are typically used in either medical or baggage screening applications.

The X-rays used are generally broad spectrum (white) X-rays.

X-ray diffraction (XRD) is a technique that is used for determining properties of a material sample based on the diffraction of X-rays by the material.

XRD measurements may be angle dispersive or energy dispersive. In angle dispersive measurements, a monochromatic beam is used, frequently created using a monochromator, and the XRD measurements made as a function of diffraction angle to probe different length scales in the sample, i.e. different values of the spacing d in the Bragg equation. Conventionally, the angle by which the beam is diffracted is referred to as 2θ.

In contrast, energy dispersive XRD uses wide spectrum X-rays and an energy-sensitive detector that can detect not merely the X-ray intensity but the X-ray intensity as a function of energy. The different energies used each correspond to a different length scales in the sample.

A baggage inspection system based on the CT technique has been proposed in US2009/0213989. Further details of the proposed CT system are provided in US 7,492,862. A sample is mounted on a rotating platform and attenuation maps, i.e. conventional X-ray images showing the X-ray absorption across the sample, are taken, and a computed image reconstructed.

The baggage inspection system additionally has an XRD system which brings a region of the sample identified in the CT into alignment with a second radiation source and carries out X-ray diffraction on that region of the sample to establish further information about the region. The system is intended to detect specific high atomic number metals as well as lower atomic number materials such as potentially explosive materials. The system uses hard X-rays, presumably for good penetration, and energy dispersive XRD.

R C Barroso et al, "X-ray diffraction microtomography using synchrotron radiation", Nuclear Instruments and Methods in Physics Research A 471 (2001) pages 75 to 79, teaches an XRD instrument using synchrotron radiation which is also used for CT measurements.

J.A. Griffiths "X-Ray Diffraction CT of Excised Breast Tissue Sections: First Results from Elettra", 2003 IEEE Nuclear Symposium Record, vol. 4, pages 2330-2334, discloses an apparatus for recording transmission and diffraction CT data sets of breast tissues samples.

According to the invention, the imaging system operates in an XRD mode carrying out angle dispersive X-ray diffraction on the sample by measuring the X-ray diffraction as a function of diffraction angle 2θ using the X-ray detector and a CT mode to measure absorption of a sample as a function of position across the sample with the two-dimensional X-ray detector.

By providing an additional CT functionality in XRD apparatus, rather than XRD functionality in CT apparatus, the inventor has realised that it is possible to combine accurate XRD measurements with CT functionality.

In particular, the X-ray source may be a source that emits X-rays having a small number of peaks, for example two, in an energy band in the range 4.5keV to 25keV. The two peaks may be closely paced k α and k β lines. The source may also emit broad spectrum radiation, such as Bremsstrahlung. In some embodiments, monochromatic X-rays are used with a much lower bandwidth than this, in particular 1% of the nominal energy or better.

The imaging system may be arranged to operate in the CT mode to capture a plurality of absorption measurements of the absorption of the sample as a function of position across the sample by rotating the sample with respect to the source and detector, and to combine the plurality of measured absorption measurements to produce a CT image.

In an embodiment, the apparatus includes an integrated unit comprising the two-dimensional X-ray detector and a rotary sample mount for mounting the sample within 5cm of the detector.

In another aspect, the invention relates to a method of operation of an apparatus in a CT mode and an angle dispersive XRD mode.

For a better understanding of the invention, embodiments will now be described, purely by way of example, with reference to the accompanying drawings, in which:
Figure 1 shows an embodiment of the invention; and
Figure 2 shows an integrated unit used in another embodiment of the invention.
Figure 3 shows the XRD spectrum taken with a real and a fake sample of a drug;
Figure 4 shows the CT image of the same samples as in Figure 3;
Figure 5 shows measurements of absorption of a sample of a drug; and
Figure 6 shows CT images of a concrete sample.
The figures are schematic and not to scale.

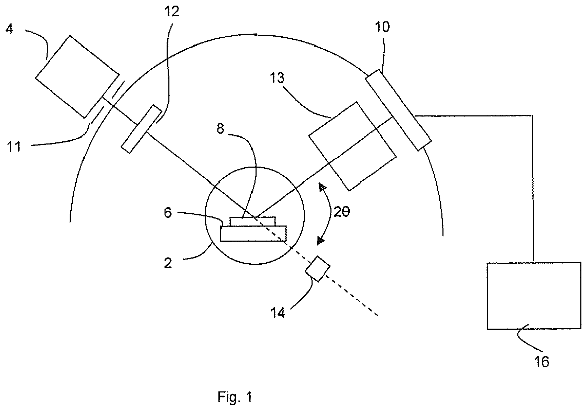

Referring to Figure 1, XRD apparatus used with the present invention uses an angle dispersive XRD arrangement with a goniometer 2 mounting an X-ray source 4, a sample stage 6 for mounting a sample 8 and a two-dimensional photon counting X-ray detector 10. The goniometer can change the relative angles of the X-ray source, 4, sample and X-ray detector. The specific detector 10 used for the measurements presented below is the Panalytical Pixcel (registered trade mark) two-dimensional detector.

In use, the X-ray source provides a monochromatic beam of X-rays at a particular wavelength, and hence energy. The energy is conveniently in the range 5.4keV to 25keV which can be achieved using a Cr target for 5.4keV up to 25keV with an Ag target. Co, Cu or Mo targets may be used to provide intermediate X-ray energies. The radiation may include Bremsstrahlung radiation together with one or more lines, as will be discussed in more detail below.

A monochromator 12 may be optionally provided to provide truly monochromatic radiation. In this way, highly monochromatic radiation may be used, with the energies varying by no more than 1% from the nominal energy. For example, the monochromator 12 may be used to select a single line from the Cu Kα doublet using a Cu source.

Further, a collimator 13 may be provided either between source and sample or between sample and the detector 10, as shown. Where the collimator 13 is provided between the sample and the detector a two-dimensional collimator may be used. A beam conditioner 11 may also be provided as will be discussed below.

To prevent unscattered radiation being incident on the detector, a direct beam absorber 14 - i.e. a beam stop - may be provided after the sample in the direct line of the beam of X-rays. This is particularly useful when small diffraction angles 2θ are being used (less than about 5° or 10°).

The radiation is incident on sample 8 and diffracted by an angle 2θ. The two-dimensional detector detects the X-rays diffracted at a plurality of angles 2θ in parallel. To obtain a broader range of angles 2θ, the arrangement of source, sample and detector can be varied using the goniometer.

As will be appreciated by those skilled in the art of X-ray diffraction, additional crystals may be provided to provide additional monochromation and/or additional angular selection to provide higher resolution XRD measurements if required.

So far, the discussion has centred on XRD measurements. The inventors have realised that such an XRD system can also be used for CT measurements.

To carry out CT measurements, the two-dimensional photon-counting detector 10 is used to measure a direct absorption image of the sample, i.e. the absorption of the sample across its area. The direct beam absorber 14 should be removed for this measurement. The sample may then be rotated to different positions, and further direct absorption images taken. Equivalently to rotating the sample, the source and detector may be rotated around the sample instead.

In this configuration, a beam conditioner 11 may be provided at the output of the source 4 to provide a suitable beam. The conditioner may be a pinhole, a slit, an X-ray mirror, X-ray lens or a focussing component such as a capilliary or a fresnel lens for example.

A computer 16 is provided to accept the image data recorded by the detector 10 in both XRD and CT arrangements and to process that data.

The embodiments described use an X-ray source with a target - the preferred embodiments use Cr, Co, Cu, Mo or Ag which typically have the kα and kβ lines in the range 5 to 25 keV. These sources emit broad spectrum (Bremsstrahlung) radiation together with the kα and kβ lines, but in general a substantial amount of the emitted energy is in the kα and kβ lines, typically a doublet.

This energy may be compared, for example, with typical energies around 100keV dominated by the Bremsstrahlung for typical CT measurements. Indeed, CT measurements can use even higher energies than 100keV - see for example the range 2 to 20 MeV proposed in US2009/0213989.

Note that when applied to low atomic number elements in a sample, the mechanism that causes X-rays to be absorbed or scattered in the sample varies as a function of energy. To take scattering by carbon as the element in the sample as an example, at low energies the scattering is dominated by the photoelectric effect, caused by the interaction of X-rays with the electrons of the atom. At higher energies, the scattering is dominated by incoherent scattering. Coherent scattering also makes a contribution to absorption of X-rays, though is not the dominant mechanism.

The break-even point where the photoelectric contribution to attenuation equals the incoherent scattering contribution is just above 20keV for Carbon - above 20keV the incoherent scattering is more significant than the photoelectric effect and below the photoelectric effects dominates.

The inventors have realised that by probing materials using CT at an energy of 5 to 25keV where photoelectric effects are significant, it becomes much easier to image samples containing lighter elements and to detect contrasts between elements. In other words, the use of energies below 25keV has particular benefits for carrying out CT measurements since a different mechanism dominates the scattering of low atomic number elements which can give rise to higher contrast.

Thus, compared with conventional CT, the present invention uses low energy, relatively monochromatic X-rays.

The use of low energy X-rays, also known as soft X-rays, has further advantages for CT. In particular, as well as improved contrast, the higher energy X-rays scatter more, whether from coherent or incoherent scattering, or both, so the use of low energy X-rays allows less scattering and hence better signal to noise ratio.

Further, the use of low energy X-rays allows the use of different detectors to those required for hard X-rays in the conventional CT energy range of around 100keV or more. A two-dimensional photon counting low noise solid state detector may be used, of a type which is essentially noise free, unlike a charged coupled detector. In particular, embodiments of the invention use the Panalytical Pixcel (Registered Trade Mark) detector, which is a very low noise detector suitable for the 5 to 25 keV energy range.

The use of radiation with monochromatic components also has advantages. A particular problem with CT measurements is the effect known as "beam hardening", in which an X-ray beam is hardened after passing through the sample. This is caused by non-uniform attenuation of different X-ray energies which results in the preferential absorption of X-rays in energy ranges with higher attenuation coefficients, i.e. lower transmission. This causes problems for the CT calculations.

The embodiments described use a source which emits a substantial fraction of the energy (30% or more, 50% or more) in a small number of lines, especially the kα and kβ doublet. The inventors have realised that it is not necessary to go to the difficulty and expense of using a synchrotron to generate X-rays, which generates very highly monochromatic lines indeed but at very high cost. Instead, the type of X-ray source used for XRD using a Cr, Co, Cu, Mo or Ag target is sufficiently monochromatic to provide an improvement with regard to beam hardening over the higher energy sources typically used for CT measurements.

Certain relationships between the size of the source, the pixel size of the detector and the distances between source, detector and sample may be used to provide improved resolution when carrying out CT measurements in this somewhat unusual configuration.

In particular, the inventors have determined that for best resolution CT measurements the distance between the sample and the detector divided by the pixel size should be approximately equal to the distance between the sample and the source divided by the effective size of the X-ray source. Other ratios can be used where required, generally by space considerations, at some cost in resolution.

Accordingly, when using a source with an effective size 0.4mm by 1.2mm, using the 1.2mm in the plane of the diffraction, but a higher resolution pixel detector, with pixels perhaps 50 µm across, the detector should be located very close to the sample - optimally the source would be located about 20 (1.2mm / 0.05mm) times the distance. The use of the beam conditioner 11 as indicated above can reduce the effective size of the source and so allow the detector-sample distance to be relatively larger. Thus, the beam conditioner is especially useful for the CT measurements but may also be used for the XRD measurements.

In the measurements described below, an algorithm known as "filtered back projection" has been used for the CT calculations, but any algorithm for the CT calculations may be implemented in the computer 16. Such algorithms are known to those skilled in the art and so the details will not be described further.

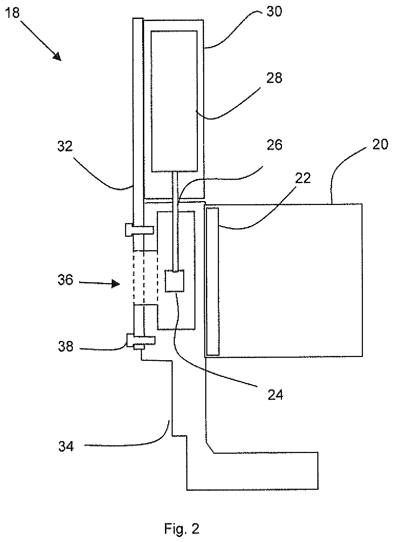

Figure 2 illustrates an integrated unit 18 that has been used in a specific embodiment for achieving the mounting of the sample very close to the detector. Detector housing 20 holds a two-dimensional pixel detector 22 and further detector electronics (not shown).

A sample mount 24 which is arranged attached to a rotary drive axle 26 driven by motor 28 contained in motor housing 30. The motor housing 30 is fixedly mounted on mounting plate 32 and this mounting plate 32 and the detector housing 20 are both mounted on mount 34. The mount 34 is then mounted on the goniometer 2. The mount 34 and mounting plate 32 both have an opening 36 at the location indicated by the arrow to allow X-rays to reach the sample directly without passing through the mounting plates. Screws 38 are shown mounting the mounting plate 32 on mount 34 - these may be undone to remove the mounting plate 32 together with the motor housing 30, axle 26 and sample mount 24 to allow a sample to be mounted and removed.

The integrated unit is fixed using mount 34.

In this arrangement, the integrated unit 18 is mounted at the centre of the goniometer 2, where the sample is for XRD, and the detector 22 brought close to the integrated unit. Rotation of the sample, especially for CT, may be achieved not by the goniometer 2 but instead by using rotary drive axle 26 driven by motor 28.

In an alternative arrangement, the integrated unit 18 is mounted to the detector 22 with the detector 22 away from the centre of the goniometer. Rotation of the sample is again achieved by using rotary drive axle 26 driven by motor 28. Thus, the integrated unit 18 is a detector and sample mounting unit 18 with an integral sample rotation mechanism. The sample may be held close (typically less than 5cm, preferably less than 2cm or even 1cm) from the detector 22.

Of course, in alternative embodiments, when using a lower resolution detector and a higher resolution source, perhaps with similar sizes, then the source and detector should be located at a similar distance from the sample.

Some benefits of the approach proposed include the savings from having a single apparatus with a single source that can do both XRD and CT measurements of a sample.

Embodiments of the invention are of particular application in a number of fields. In particular, the invention may be of particular use where there are special crystal inclusions in a sample.

One specific area where the embodiments may be useful is in the field of pharmaceutical capsules. The use of CT to examine the pharmaceuticals allows the viewing off the whole volume of the capsule and to analyze and to inspect the entire volume of the sample.

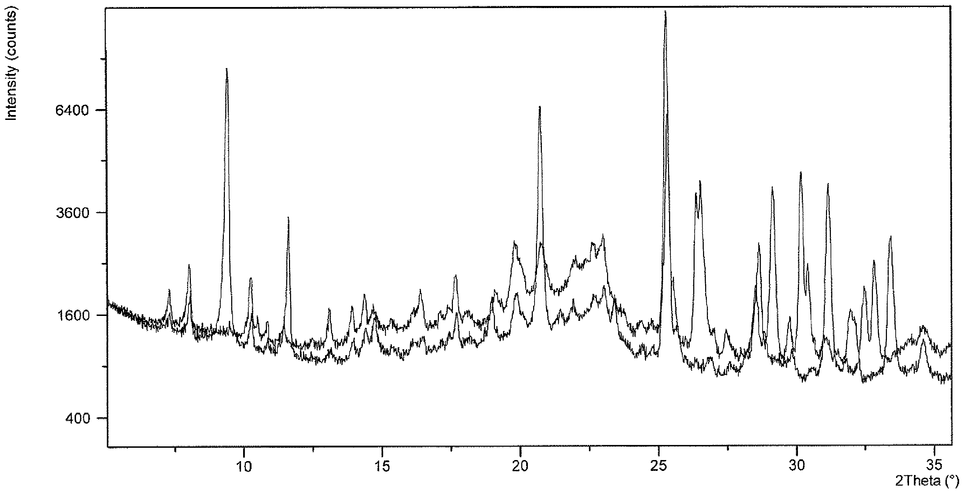

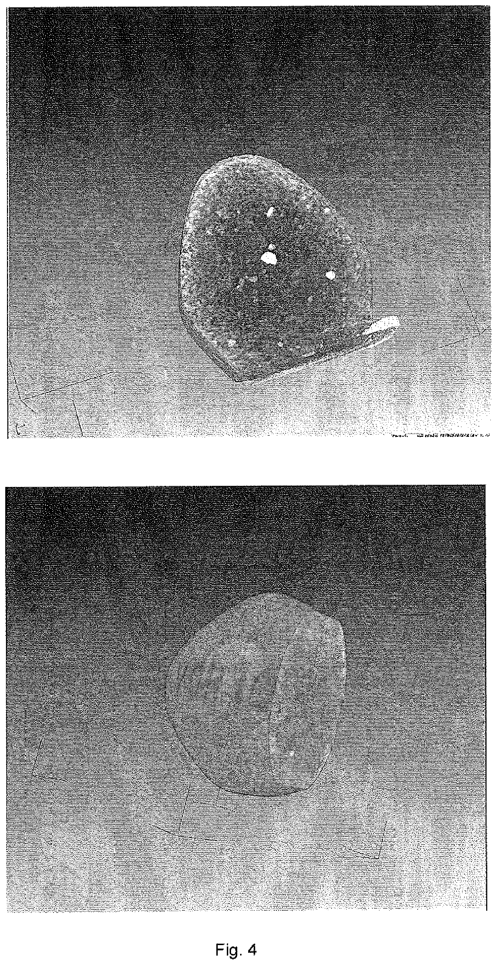

Real and fake tablets were tested and the X-ray diffraction results are shown in Figure 3. Both tablets contained the same amount of active pharmaceutical ingredient (API) as was confirmed by high performance liquid chromatography (HPLC). Although there are some differences, the determination of a fake tablet using just the X-ray diffraction results is not completely straightforward. However, using the CT scanner, the results shown in Figure 4, the counterfeit tablet (upper image) clearly shows more inhomogeneities than the genuine tablet (lower image) and is therefore immediately identifiable.

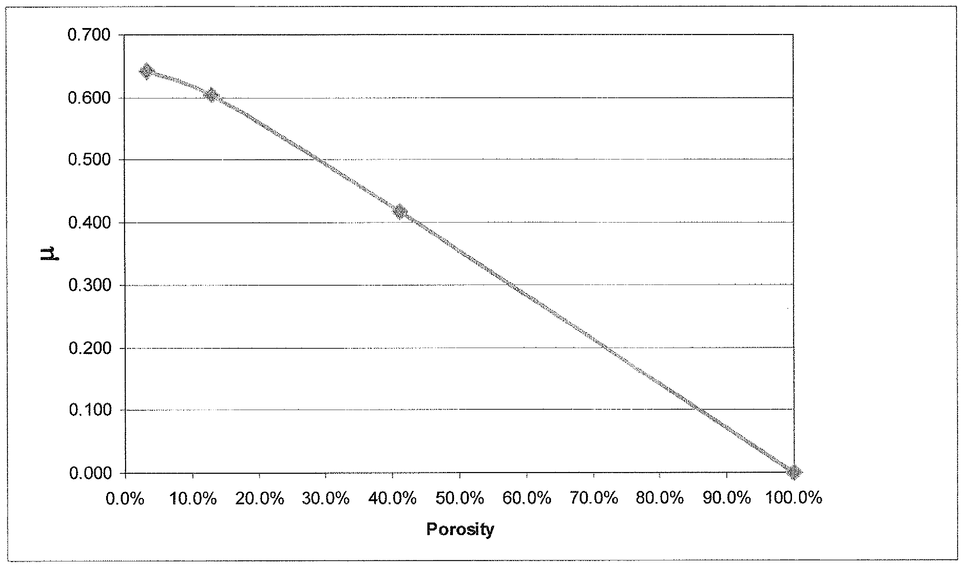

Another use is to determine the porosity of pharmaceutical tablets. Tablets of Avicel (registered trade mark) were prepared with different porosity, namely three different values of porosity (the void fraction) ε of 3.5%, 13.1% and 41.2%. The pores in these tablets are too small to normally be resolvable. CT scans were taken from these tablets and the transmission ratio µ, defined as the transmission through the tablet and the total radiation, determined from the results. The transmission ratio µ gave a good measure of the porosity of the tablets as illustrated in the graph in Figure 5.

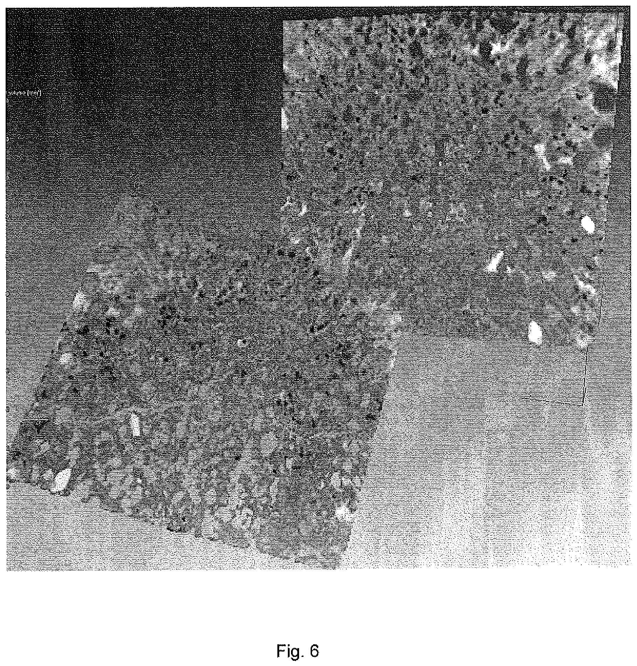

The use of CT in XRD equipment is not only applicable to the field of pharmaceuticals. For example, two samples of concrete were measured, one being a brittle sample and one more stiff and stable. The X-ray diffraction results show some differences in the texture of the calcite and quartz phases. However, this was not enough to clearly distinguish between the samples. Using CT good images of the sample showing the pores could be determined as shown in Figure 6.

The use of the invention is not, of course, limited to the specific applications described and those skilled in the art will be able to use the invention in a wide variety of applications.

## Claims

1. An imaging system, comprising:
an X-ray source (4) for emitting an X-ray beam;
an X-ray detector (10);
a sample position; and
a computer (16) arranged to process the input from the detector (10) and output information about the sample based on the input from the detector and the relative positions of X-ray source, X-ray detector and sample;
wherein the imaging system is arranged to operate in an X-ray diffraction, XRD, mode carrying out angle dispersive X-ray diffraction on the sample by measuring the X-ray diffraction as a function of diffraction angle 2θ using the X-ray detector (10), and to operate in a computed tomography, CT, mode;
**characterised in that** the X-ray detector (10) is a two-dimensional photon counting X-ray detector;
further **characterised by** a goniometer (2) for positioning the X-ray source (4), X-ray detector (10) and a sample (8) at the sample position relative to one another;
wherein the X-ray source (4) uses a Cr, Co, Cu, Mo or Ag target; and
the imaging system is arranged to operate in the CT mode by measuring the absorption of the sample (8) as a function of position across the sample with the two-dimensional X-ray detector.

2. An imaging system according to claim 1, wherein the X-ray source (4) is a source that emits X-rays having at least 30% of the total emitted X-ray intensity in at least one X-ray line in an energy band in the range 4.5keV to 25keV.

3. An imaging system according to any preceding claim, wherein the imaging system is arranged to operate in the CT mode to capture a plurality of absorption measurements of the absorption of the sample as a function of position across the sample by rotating the sample with respect to the source and detector, and to combine the plurality of measured absorption measurements to produce a CT image.

4. An imaging system according to any preceding claim further comprising an integrated unit (18) comprising a rotary sample mount for mounting the sample within 5cm of the detector.

5. An imaging system according to claim 4 wherein the integrated unit further comprises a rotary drive connected to the sample mount for rotating the rotary sample mount to a plurality of different orientations for a CT measurement in the CT mode.

6. An imaging system according to any preceding claim further comprising a beam conditioner (11) arranged adjacent to the X-ray source, the beam conditioner being a pinhole aperture, a slit or an X-ray mirror.

7. An imaging system according to any preceding claim further comprising a monochromator (12).

8. An imaging system according to claim 1, further comprising a beam stop (14) placed in the direct line of the X-ray beam after the sample in the XRD mode, the beam stop being removed in the CT mode.

9. A method of operating an imaging system, comprising:
positioning an X-ray source (4), X-ray detector (10) and a sample (8) at a sample position relative to one another;
emitting an X-ray beam from the X-ray source (4) towards the sample (8);
detecting the beam after interaction with a sample using the X-ray detector (10);
the method including processing the input from the detector (10) and output information about the sample based on the input from the detector and the relative positions of X-ray source, X-ray detector and sample;
wherein the imaging system is arranged to operate in an X-ray diffraction, XRD, mode carrying out angle dispersive X-ray diffaction on the sample by measuring the X-ray diffraction as a function of diffraction angle 2θ using the X-ray detector; and
to operate in a computed tomography, CT, mode measuring absorption of a sample as a function of position across the sample with the X-ray detector
**characterised in that** the X-ray detector (10) is a two-dimensional photon counting X-ray detector;
further **characterised in that** the imaging system comprises a goniometer (2) for positioning the X-ray source, X-ray detector and a sample at the sample position relative to one another;
wherein the X-ray source (4) uses a Cr, Co, Cu, Mo or Ag target; and
the imaging system is operated in the CT mode by measuring the absorption of a sample as a function of position across the sample with the two-dimensional X-ray detector.

10. A method according to claim 9 comprising operating in the CT mode by capturing a plurality of absorption measurements of the absorption of the sample as a function of position across the sample by rotating the sample with respect to the source and detector, and combining the plurality of measured absorption measurements to produce a CT image.

11. A method according to claim 10, further comprising mounting the sample on an integrated unit comprising the two-dimensional X-ray detector and a rotary sample mount (18), mounting the sample within 5cm of the detector; and
rotating the sample on the rotary sample mount to obtain the plurality of absorption measurements.

## Patentansprüche

1. Bildgebungssystem, umfassend:
eine Röntgenquelle (4) zum Ausgeben eines Röntgenstrahls;
einen Röntgendetektor (10);
eine Probenposition; und
einen Computer (16), der angeordnet ist, um die Eingabe vom Detektor (10) zu verarbeiten und
Informationen über die Probe basierend auf der Eingabe vom Detektor und den relativen Positionen der Röntgenquelle, des Röntgendetektors und der Probe auszugeben;
wobei das Bildgebuungssystem angeordnet ist, um in einem Röntgenbeugungs-(XRD)-Modus zu operieren, wobei eine winkeldispersive Röntgenbeugung an der Probe ausgeführt wird, indem die Röntgenbeugung als eine Funktion des Beugungswinkels 2θ mithilfe des Röntgendetektors (10) gemessen wird, und in einem Computertomographie-(CT)-Modus zu operieren;
**dadurch gekennzeichnet, dass** der Röntgendetektor (10) ein zweidimensionaler Photonen zählender Röntgendetektor ist;
ferner **gekennzeichnet durch** einen Goniometer (2) zum Positionieren der Röntgenquelle (4), des Röntgendetektors (10) und einer Probe (8) in die Probenposition bezüglich einander;
wobei die Röntgenquelle (4) ein Cr-, Co-, Cu-, Mo- oder Ag-Ziel verwendet und das Bildgebungssystem angeordnet ist, um im CT-Modus zu operieren, indem es die Absorption der Probe (8) als eine Funktion der Position über die Probe mit dem zweidimensionalen Röntgendetektor misst.

2. Bildgebungssystem nach Anspruch 1, wobei die Röntgenquelle (4) eine Quelle ist, die Röntgenstrahlung ausgibt, die mindestens 30 % der insgesamt ausgegebenen Röntgenintensität in mindestens einer Röntgenlinie in einem Energieband im Bereich von 4,5 keV bis 25 keV aufweist.

3. Bildgebungssystem nach einem der vorstehenden Ansprüche, wobei das Bildgebungssystem angeordnet ist, um im CT-Modus zu operieren, um eine Vielzahl von Absorptionsmessungen in der Absorption der Probe als eine Funktion der Position über die Probe durch Rotieren der Probe bezüglich der Quelle und des Detektors zu erfassen und die Vielzahl gemessener Absorptionsmessungen zur Erzeugung eines CT-Bilds zu kombinieren.

4. Bildgebungssystem nach einem der vorstehenden Ansprüche, ferner umfassend eine integrierte Einheit (18), umfassend eine rotierende Probenhalterung zum Montieren der Probe innerhalb von 5 cm des Detektors.

5. Bildgebungssystem nach Anspruch 4, wobei die integrierte Einheit ferner einen rotierenden Antrieb umfasst, der mit der Probenhalterung verbunden ist, um die rotierende Probenhalterung in eine Vielzahl unterschiedlicher Ausrichtungen für eine CT-Messung im CT-Modus zu rotieren.

6. Bildgebungssystem nach einem der vorstehenden Ansprüche, ferner umfassend einen Strahlformer (11), der neben der Röntgenquelle angeordnet ist, wobei der Strahlformer eine Nadellochöffhung, ein Schlitz oder ein Röntgenspiegel ist.

7. Bildgebungssystem nach einem der vorstehenden Ansprüche, ferner umfassend einen Monochromator (12).

8. Bildgebungssystem nach Anspruch 1, ferner umfassend einen Strahlstopp (14), der in der direkten Linie des Röntgenstrahls nach der Probe im XRD-Modus platziert ist, wobei der Strahlstopp im CT-Modus entfernt wird.

9. Verfahren zum Operieren eines Bildgebungssystems, umfassend:
Positionieren einer Röntgenquelle (4), eines Röntgendetektors (10) und einer Probe (8) in eine Probenposition bezüglich einander;
Ausgeben eines Röntgenstrahls von der Röntgenquelle (4) zur Probe (8);
Erfassen des Strahls nach der Interaktion mit einer Probe mithilfe des Röntgendetektors (10);
wobei das Verfahren das Verarbeiten der Eingabe vom Detektor (10) und Ausgeben von Informationen über die Probe basierend auf der Eingabe vom Detektor und den relativen Positionen der Röntgenquelle, des Röntgendetektors und der Probe umfasst;
wobei das Bildgebungssystem angeordnet ist, um in einem Röntgenbeugungs-(XRD)-Modus zu operieren, wobei eine winkeldispersive Röntgenbeugung an der Probe ausgeführt wird, indem die Röntgenbeugung als eine Funktion des Beugungswinkels 2θ mithilfe des Röntgendetektors gemessen wird; und
um in einem Computertomographie-(CT)-Modus zu operieren, wobei die Absorption einer Probe als eine Funktion der Position über die Probe mit dem Röntgendetektor gemessen wird, **dadurch gekennzeichnet, dass** der Röntgendetektor (10) ein zweidimensionaler Photonen zählender Röntgendetektor ist;
ferner **gekennzeichnet dadurch, dass** das Bildgebungssystem einen Goniometer (2) zum Positionieren der Röntgenquelle, des Röntgendetektors und einer Probe in die Probenposition bezüglich einander umfasst;
wobei die Röntgenquelle (4) ein Cr-, Co-, Cu-, Mo- oder Ag-Ziel verwendet und das Bildgebungssystem im CT-Modus operiert wird, indem es die Absorption einer Probe als eine Funktion der Position über die Probe mit dem zweidimensionalen Röntgendetektor misst.

10. Verfahren nach Anspruch 9, umfassend das Operieren im CT-Modus durch Erfassen einer Vielzahl von Absorptionsmessungen in der Absorption der Probe als eine Funktion der Position über die Probe durch Rotieren der Probe bezüglich der Quelle und des Detektors und Kombinieren der Vielzahl gemessener Absorptionsmessungen zur Erzeugung eines CT-Bilds.

11. Verfahren nach Anspruch 10, ferner umfassend das Montieren der Probe an einer integrierten Einheit, umfassend den zweidimensionalen Röntgendetektor und eine rotierende Probenhalterung (18), Montieren der Probe innerhalb von 5 cm des Detektors; und
Rotieren der Probe auf der rotierenden Probenhalterung, um die Vielzahl von Absorptionsmessungen zu erhalten.

## Revendications

1. Système d'imagerie comprenant:
une source de rayons X (4) destinée à l'émission d'un faisceau de rayons X ; un détecteur de rayons X (10) ; une position d'échantillon ; et
un ordinateur (16) agencé pour traiter l'entrée provenant du détecteur (10) et délivrer en sortie des informations concernant l'échantillon sur la base de l'entrée provenant du détecteur et des positions relatives de la source de rayons X, du détecteur de rayons X et l'échantillon ;
ledit système d'imagerie étant agencé pour fonctionner dans un mode de diffraction de rayons X (XRD) effectuant une diffraction de rayons X en dispersion angulaire sur l'échantillon en mesurant la diffraction des rayons X en fonction de l'angle de diffraction 2θ à l'aide du détecteur de rayons X (10) et pour fonctionner dans un mode de tomographie assistée par ordinateur (CT),
**caractérisé en ce que** le détecteur de rayons X (10) est un détecteur de rayons X par comptage de photons bidimensionnel ;
**caractérisé en outre par** un goniomètre (2) permettant de positionner la source de rayons X (4), le détecteur de rayons X (10) et un échantillon (8) au niveau de la position d'échantillon les uns par rapport aux autres ;
ladite source de rayons X (4) utilisant une cible de Cr, Co, Cu, Mo ou Ag ; et ledit système d'imagerie étant agencé pour fonctionner dans le mode CT en mesurant l'absorption de l'échantillon (8) en fonction de la position à travers l'échantillon avec le détecteur de rayons X bidimensionnel.

2. Système d'imagerie selon la revendication 1, ladite source de rayons X (4) étant une source qui émet des rayons X possédant au moins 30 % de l'intensité de rayons X émise totale dans au moins une ligne de rayons X dans une bande d'énergie comprise dans la plage allant de 4,5 keV à 25 keV.

3. Système d'imagerie selon l'une quelconque des revendications précédentes, ledit système d'imagerie étant agencé pour fonctionner dans le mode CT pour capturer une pluralité de mesures d'absorption de l'absorption de l'échantillon en fonction de la position à travers l'échantillon en tournant l'échantillon par rapport à la source et au détecteur et pour combiner la pluralité de mesures d'absorption mesuré afin de produire une image CT.

4. Système d'imagerie selon l'une quelconque des revendications précédentes, comprenant en outre une unité intégrée (18) comprenant un support d'échantillon rotatif pour le montage de l'échantillon dans les 5 cm du détecteur.

5. Système d'imagerie selon la revendication 4, ladite unité intégrée comprenant en outre un entraînement rotatif raccordé au support d'échantillon destiné à faire tourner le support d'échantillon rotatif en une pluralité d'orientations différentes pour une mesure de CT dans le mode CT.

6. Système d'imagerie selon l'une quelconque des revendications précédentes, comprenant en outre un conditionneur de faisceau (11) agencé adjacent à la source de rayons X, ledit conditionneur de faisceau étant une ouverture de trou de sténopé, une fente ou un miroir à rayons X.

7. Système d'imagerie selon l'une quelconque des revendications précédentes, comprenant en outre un monochromateur (12).

8. Système d'imagerie selon la revendication 1, comprenant en outre un arrêt de faisceau (14) placé dans la ligne directe du faisceau de rayons X après l'échantillon dans le mode XRD, ledit arrêt de faisceau étant retiré dans le mode CT.

9. Procédé de fonctionnement d'un système d'imagerie, comprenant :
le positionnement d'une source de rayons X (4), un détecteur de rayons X (10) et un échantillon (8) au niveau d'une position d'échantillon par rapport aux uns et aux autres ;
l'émission d'un faisceau de rayons X depuis la source de rayons X (4) vers l'échantillon (8) ;
la détection du faisceau après une interaction avec un échantillon à l'aide du détecteur de rayons X (10);
le procédé comprenant le traitement de l'entrée du détecteur (10) et la sortie d'informations concernant l'échantillon sur la base de l'entrée du détecteur et des positions relatives de la source de rayons X, du détecteur de rayons X et de l'échantillon ;
ledit système d'imagerie étant agencé pour fonctionner dans un mode de diffraction de rayons X, (XRD), effectuant une diffraction de rayons X en dispersion angulaire sur l'échantillon en mesurant la diffraction de rayons X en fonction de l'angle de diffraction 2θ à l'aide du détecteur de rayons X ; et
pour fonctionner dans un mode de tomographie assisté par ordinateur (CT) mesurant l'absorption d'un échantillon en fonction de la position à travers l'échantillon avec le détecteur de rayons X **caractérisé en ce que** le détecteur de rayons X (10) est un détecteur de rayons X par comptage de photon bidimensionnel ;
**caractérisé, en outre, en ce que** le système d'imagerie comprend un goniomètre (2) permettant de positionner la source de rayons x, le détecteur de rayons x et un échantillon au niveau de la position d'échantillon les uns par rapport aux autres ;
ladite source de rayons X (4) utilisant une cible de Cr, Co, Cu, Mo ou Ag ; et ledit système d'imagerie fonctionnant dans le mode CT en mesurant l'absorption d'un échantillon en fonction de la position à travers l'échantillon avec le détecteur de rayons X bidimensionnel.

10. Procédé selon la revendication 9 comprenant le fonctionnement dans le mode CT en capturant une pluralité de mesures d'absorption de l'absorption de l'échantillon en fonction de la position à travers l'échantillon en faisant tourner l'échantillon par rapport à la source et au détecteur et en combinant la pluralité de mesures d'absorption mesurée afin de produire une image de CT.

11. Procédé selon la revendication 10, comprenant en outre le montage de l'échantillon sur une unité intégrée comprenant le détecteur de rayons X bidimensionnel et un support d'échantillon rotatif (18), le montage de l'échantillon dans les 5 cm du détecteur ; et
la rotation de l'échantillon sur le support d'échantillon rotatif pour obtenir la pluralité de mesures d'absorption.
